# EUROPÄISCHE PATENTSCHRIFT

(11) **EP 0 622 143 B1**
(45) Veröffentlichungstag und Bekanntmachung des Hinweises auf die Patenterteilung: **27.03.1996**
(21) Anmeldenummer: 94100694.2
(22) Anmeldetag: 19.01.1994
(51) Int. Cl.: B23B 31/12

(54) **Bohrfutter**
Drill chuck
Mandrin de perceuse

(30) Priorität: 27.04.1993 DE 4313742
(43) Veröffentlichungstag der Anmeldung: 02.11.1994
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- DE-C- 3 405 511
- DE-C- 3 713 457
- DE-C- 4 238 503

## Beschreibung

Die Erfindung betrifft ein Bohrfutter, insbes. zum Schlagbohren, mit einem an eine Bohrspindel anschließbaren Futterkörper, mit zwischen sich eine Aufnahme für das Bohrwerkzeug bildenden Spannbacken, die zum Öffnen und Schließen des Bohrfutters durch einen am Futterkörper drehbar geführten Spannring verstellbar sind, ferner mit einer Sperreinrichtung für den Spannring, bestehend aus einem koaxialen Kranz von Sperrausnehmungen am Spannring und aus mindestens einem Sperrglied, das unter der Kraft einer Sperrfeder im wesentlichen radial von innen nach außen in die Sperrausnehmungen eingerückt ist, wobei das Sperrglied und die Sperrausnehmungen einander in derart geneigten Flankenflächen anliegen, daß diese den Spannring in der dem Öffnen des Bohrfutters entsprechenden Drehrichtung gegen Verdrehen sperren, beim Verdrehen des Spannrings in der entgegen gesetzten, also dem Schließen des Bohrfutters entsprechenden Drehrichtung aber das Sperrglied gegen die Kraft der Sperrfeder aus den Sperrausnehmungen herausdrücken und dadurch von Sperrausnehmung zu Sperrausnehmung verrutschen lassen, und mit einem am Futterkörper drehbar geführten koaxialen Stellring, durch dessen Verdrehen das Sperrglied in einen aus den Sperrausnehmungen ausgerückten Zustand verstellbar ist.

Aus der DE 28 47 927 C1 ist ein Bohrfutter dieser Art bekannt, das mittels eines Futterschlüssels zu betätigen ist, der mit einem Schlüsselzapfen am Futterkörper angesetzt wird und mit einem kegeligen Zahnritzel in einen entsprechenden Zahnkranz am Spannring greift. Das Sperrglied ist ein mit seiner Längsachse etwa senkrecht und exzentrisch zur Futterachse im Futterkörper geführter Sperrstift, der unter der Kraft der Sperrfeder, bezogen auf den Futterkörper, von innen nach außen in den an der inneren Umfangsfläche des Spannrings angeordneten Kranz der Sperrausnehmungen gedrückt wird. Dabei greift der Sperrstift mit einer von seiner Stirnfläche und seiner Umfangsfläche gebildeten Kante in die Sperrausnehmungen. In Bezug auf die die jeweilige Sperrausnehmung teilende Radialebene sind die beiden Flanken der Sperrausnehmung spiegelsymmetrisch zueinander geneigt, so daß von den beiden Flanken die in der dem Schließen des Bohrfutters entsprechenden Drehrichtung des Spannrings vorlaufende Flanke an der Umfangsfläche, die nachlaufende Flanke an der Stirnseite des Sperrstiftes anliegt. Die nachlaufende Flanke beaufschlagt daher den Sperrstift in seiner Führungsrichtung und kann somit beim Verdrehen des Spannrings im Sinne eines Schließens des Bohrfutters den Sperrstift unter Zurückdrücken gegen die Kraft der Sperrfeder passieren, so daß in dieser Drehrichtung der Spannring durch den Sperrstift nicht behindert wird. Die entgegen gesetzte Drehrichtung ist dagegen durch die den Sperrstift umfangsseitig anliegende andere Flanke gesperrt, da sie den Sperrstift quer zu seiner Führungsrichtung beaufschlagt und ihn daher nicht aus dem Eingriff in den Sperrausnehmungen zurückdrücken kann. Das Öffnen des Bohrfutters ist daher erst möglich, wenn der Sperrstift durch Verdrehen des Stellrings aus dem Eingriff in den Sperrausnehmungen herausgehoben worden ist. Dabei ist zwischen dem Stellring und dem Futterkörper eine Rastvorrichtung vorgesehen, die den Stellring in einer Raststellung hält, in der sich der Sperrstift im Eingriff in den Sperrausnehmungen befindet. Außerhalb dieser Raststellung dagegen hält der Stellring den Sperrstift in der aus den Sperrausnehmungen herausgehobenen Stellung fest, so daß der Spannring frei verdreht werden kann. Jedoch bildet diese Rastvorrichtung keine wirksame Begrenzung der Verdrehung des Stellrings gegenüber dem Futterkörper; der Stellring kann über die Raststellung hinaus beliebig am Futterkörper verdreht werden. Zum Öffnen des gespannten Bohrfutters ist im Ergebnis zunächst der Stellring aus seiner Raststellung zu verdrehen, damit der Sperrstift den Spannring freigibt. Umgekehrt darf nach dem Spannen des Bohrfutters nicht vergessen werden, den Stellring wieder in die Raststellung zurückzudrehen, weil andernfalls das Bohrfutter nicht gegen ungewünschtes Lösen und Öffnen gesichert wäre. Diese bei der Handhabung des Bohrfutters jeweils eigene Betätigung des Stellrings ist umständlich und aufwendig und erfordert Aufmerksamkeit. - Haben die Spannbacken die Möglichkeit, sich unter der Wirkung der im Bohrbetrieb auftretenden Kraftbeanspruchungen in den eingespannten Schaft des Bohrwerkzeugs einzudrücken oder einzugraben, macht sich dies als Lockerung der Einspannung bemerkbar, auch wenn der Spannring gegen ein Verdrehen im Sinne eines Öffnens des Bohrfutters gesichert ist. Diesem Nachteil kann nur durch ein Nachstellen des Spannrings von Hand oder mittels des Futterschlüssels begegnet werden, was aber in jedem Fall eine Unterbrechung des Bohrvorgangs erfordert.

Der Erfindung liegt die Aufgabe zugrunde, ein Bohrfutter der eingangs genannten Art hinsichtlich seiner Handhabung wesentlich zu vereinfachen und darüber hinaus so auszubilden, daß im Bohrbetrieb die Spannbacken eine selbsttätige Nachstellung erfahren, wenn sich die Einspannung des Werkzeugschaftes lockern sollte.

Diese Aufgabe wird nach der Erfindung dadurch gelöst, daß Anschläge vorgesehen sind, welche die Verdrehung des Stellrings relativ zum Futterkörper in beiden Drehrichtungen formschlüssig begrenzen, daß das Sperrglied an einem Schleppring angeordnet ist, der koaxial am Futterkörper drehbar gelagert ist, daß eine zwischen dem Schleppring und dem Futterkörper wirksame Nachstellfeder den Schleppring in Bezug auf den Futterkörper in derselben Drehrichtung wie die des Spannrings beim Schließen des Bohrfutters beaufschlagt, daß weitere Anschläge vorgesehen sind, welche die Verdrehung des Schlepprings relativ zum Futterkörper auf die Größe des für die Nachstellung der Spannbacken gewünschten Drehwegs des Spannrings begrenzen, und daß der maximal mögliche Drehweg des Stellrings gegenüber dem des Schlepprings, jeweils bezogen auf den Futterkörper, mindestens um soviel größer ist, wie der Stellring und der Schleppring gegeneinander verdreht werden müssen, um das Sperrglied zwischen dem an den Sperrausnehmungen eingerückten Zustand und dem ausgerückten Zustand zu verstellen, wobei durch Verdrehen des Stellrings in der dem Schließen des Bohrfutters entsprechenden Drehrichtung des Spannrings das Sperrglied sich aus dem eingerückten Zustand in den ausgerückten Zustand und umgekehrt verstellt.

Durch Die Drehbegrenzung des Stellrings gegenüber dem Futterkörper wird erreicht, daß bei der Handhabung des erfindungsgemäßen Bohrfutters der Futterkörper durch den von Hand festgehaltenen Stellring gegen ein Mitdrehen gesichert wird, wenn mit der jeweils anderen Hand der Spannring zum Öffnen und Schließen des Bohrfutters verdreht wird. Die diese Drehbegrenzung bewirkenden Anschläge können auch hohe Drehmomente aufnehmen, so daß zum Spannen und Lösen des Bohrfutters der Spannring gegenüber dem Stellring und damit dem Futterkörper mit aller Kraft verdreht werden kann, die überhaupt von Hand maximal ausgeübt werden kann. Da das Sperrglied beim Schließen des Bohrfutters diese Verdrehung nicht behindert, führt das von Hand ausgeübte Drehmoment ungeschmälert zu einer entsprechend festen Einspannung des Bohrwerkzeugs zwischen den Spannbacken. Ein Futterschlüssel ist daher zur Betätigung des erfindungsgemäßen Bohrfutters nicht notwendig. Graben sich während des Bohrbetriebs die Spannbacken in den Werkzeugschaft ein, werden sie von der Nachstellfeder über den Schleppring und das am Spannring im Eingriff stehende Sperrglied nachgestellt, nachdem die zum Schließen und Spannen des Bohrfutters vorangegangenen Verdrehungen zwischen dem Stellring und dem Spannring selbsttätig auch zum Spannen der Nachstellfeder geführt und den Schleppring in diejenige Ausgangslage gedreht haben, aus der heraus der konstruktiv vorgesehene maximal mögliche Nachstellweg auch tatsächlich für die Nachstellung der Spannbacken zur Verfügung steht. Wird umgekehrt zum Lösen und Öffnen des Bohrfutters der Spannring im entsprechenden Drehsinn gegenüber dem festgehaltenen Stellring verdreht, wird dabei zunächst automatisch das Sperrglied in den den Spannring freigebenden Zustand verstellt, so daß der Spannring dann gegenüber dem durch den Stellring am Mitdrehen gehinderten Futterkörper frei und nach Belieben verdreht werden kann. Im Ergebnis erfordert die Handhabung des erfindungsgemäßen Bohrfutters nur noch die Bedienung des Spannrings und des Stellrings, so daß es zur Handhabung des Bohrfutters keiner besonderen Kenntnis oder Aufmerksamkeit mehr bedarf. Es empfiehlt sich daher, das erfindungsgemäße Bohrfutter im übrigen so auszubilden, daß eine Handhabung des Bohrfutters unmittelbar am Futterkörper oder Schleppring erst gar nicht mehr möglich ist. Eine in diesem Zusammenhang bevorzugte Ausführungsform ist somit dadurch gekennzeichnet, daß der Spannring und der Stellring axial nebeneinander am Futterkörper angeordnet sind und gemeinsam den Futterkörper seiner ganzen axialen Länge nach überdecken.

Eine ebenfalls bevorzugte Ausführungsform der Erfindung ist dadurch gekennzeichnet, daß zwischen dem Stellring und dem Schleppring eine in Umfangsrichtung zwei Raststellungen aufweisende Rastvorrichtung ausgebildet ist, wobei sich das Sperrglied in der einen Raststellung in dem an den Sperrausnehmungen des Spannrings eingerückten Zustand und in der anderen Raststellung im ausgerückten Zustand befindet. Eine solche Rastvorrichtung genügt in der Regel bereits zur gegenseitigen Drehfixierung zwischen dem Stellring und dem Schleppring, wenn zwischen dem Stellring und dem Schleppring in den Raststellungen keine hohen Drehmomente zu übertragen sind, insbes. wenn die Nachstellfeder mit ihren Enden unmittelbar am Futterkörper und am Schleppring gehalten ist, weil dann die Nachstellfeder die Nachstellkraft unmittelbar auf den Schleppring ausüben kann. Ist dagegen die Nachstellfeder mit ihren Enden unmittelbar am Futterkörper und am Stellring gehalten, so muß die Rastvorrichtung in der Lage sein, das von der Nachstellfeder ausgeübte Drehmoment vom Stellring auf den Schleppring zu übertragen. Der durch die Rastvorrichtung vermittelte Rastsitz muß in diesem Fall also so fest sein, daß die Kraft der Nachstellfeder nicht ausreicht, die Rastvorrichtung aus dem eingerasteten Zustand zu lösen.

In einer besonders vorteilhaften Ausführungsform ist die Rastvorrichtung von in den Raststellungen miteinander zum Eingriff kommenden Rastelementen, d. h. Rastvorsprung oder Rastaufnahme, am Stellring und am Schleppring gebildet, wobei einer dieser beiden Ringe einen sich in Umfangsrichtung erstreckenden Federsteg aufweist, an dem sich mindestens eines der Rastelemente befindet. Der Federsteg erzeugt durch seine elastischen Verformungen die für die Rastvorgänge benötigte Federkraft. Vorzugsweise ist der Federsteg aus der Wand des ihn jeweils tragenden Ringes freigeschnitten.

Die Rastvorrichtung und die Sperreinrichtung können miteinander konstruktiv integriert sein. Eine dafür besonders vorteilhafte Ausführungsform ist dadurch gekennzeichnet, daß der durch einen am einen Ende offenen Schlitz vom Schleppring getrennte und radial elastisch biegbare Federsteg am freien Stegende das Sperrglied trägt, daß das am Federsteg vorgesehene Rastelement als auf der dem Schlitz zugewandten Stegseite angeordnete Rastaufnahme ausgebildet ist, und daß der Rastvorsprung als am Stellring sitzender, axial in den Schlitz eingreifender Rastzapfen ausgebildet ist, der beim Eingriff in die Rastaufnahme das Sperrglied in die Sperrausnehmungen des Spannrings drückt und beim Verdrehe des Stellrings gegenüber dem Schleppring im Schlitz zwischen der Rastaufnahme und dem geschlossenen Schlitzende verstellbar ist. Hier erfüllt der Federarm im Ergebnis eine Doppelfunktion, indem er nämlich die Federkraft sowohl für die Rastvorrichtung als auch für da Sperrglied erzeugt, also zugleich die Sperrfeder bildet. Die Federkraft für die Rastvorrichtung und für das Sperrglied können daher nicht unabhängig voneinander gewählt werden.

Wird dagegen eine Ausführungsform bevorzugt, bei der die Sperreinrichtung und die Rastvorrichtung unabhängig voneinander ausgebildet sind, weil beispielsweise die das Sperrglied beaufschlagende Federkraft und die die Rastvorrichtung bestimmende Federkraft voneinander unabhängig sein sollen, so empfiehlt es sich, das Sperrglied als am Schleppring radial geführten Schieber auszubilden. Zum Verstellen des Sperrglieds in den an den Sperrausnehmungen ausgerückten Zustand ist dann zweckmäßigerweise am Stellring ein Steuernocken und am Sperrglied eine Steuerkurve vorgesehen, an der der Steuernocken beim Verdrehen des Stellrings gegenüber dem Schleppring zur Anlage kommt, so daß das Sperrglied vom Steuernocken gegen die das Sperrglied beaufschlagende Sperrfeder aus den Sperrausnehmungen am Spannring zurückgestellt wird.

Soweit im übrigen, wie in allen vorbeschriebenen Fällen, der Eingriff des Sperrglieds am Spannring in radialer Richtung erfolgt, sind die Sperrausnehmungen am Spannring im axialen Profil vorzugsweise sägezahnförmig ausgebildet, wobei das Sperrglied mit entsprechend ausgebildeten Sägezähnen in die Sperrausnehmungen eingreift und die Anordnung so getroffen ist, daß in der Drehrichtung des Schlepprings gegenüber dem Spannring, die dessen Drehrichtung zum Schließen des Bohrfutters entspricht, die steile Zahnbrust der Sägezähne dem flacheren Zahnrücken voranläuft. Dadurch ist auf einfache Weise sicher gestellt, daß das Sperrglied bei Eingriff in die Sperrausnehmungen den Spannring im Drehsinn des Schließens des Bohrfutters formschlüssig mitnimmt, im entgegen gesetzten Drehsinn dagegen über die Sperrausnehmungen hinwegrutschen kann.

Die Anschläge zur Drehbegrenzung des Stellrings und des Schlepprings relativ zum Futterkörper können im Rahmen der Erfindung auf verschiedene Weise verwirklicht werden. Eine zweckmäßige Ausführungsform ist dadurch gekennzeichnet, daß zur Ausbildung dieser Anschläge der Futterkörper mindestens eine achsenparallele Planfläche aufweist, der am Stellring bzw. Schleppring je zwei achsenparallele und zueinander schräge Anschlagflächen gegenüberstehen, die durch ihre gegenseitige Schrägstellung den Winkel bestimmen, um den der Stellring bzw. Schleppring gegenüber dem Futterkörper jeweils maximal verdrehbar ist.

Eine andere, auf einfache Weise größere Verdrehungswinkel gegenüber dem Futterkörper ermöglichende und daher besonders bevorzugte Ausführungsform für die Anschläge zur Drehbegrenzung von Stellring und Schleppring ist dadurch gekennzeichnet, daß der Futterkörper Anschlagnocken trägt, die je in eine Aussparung im Stellring und/oder Schleppring greifen, wobei die Aussparungen sich jeweils längs eines mit der Futterachse konzentrischen Kreisbogens erstrecken und in Umfangsrichtung um den Verdrehungsweg des Stellrings bzw. Schlepprings größer als der jeweils in die Aussparung greifende Anschlagnocken sind, so daß die Anschläge zur Drehbegrenzung des Stellrings bzw. Schlepprings von den sich in Umfangsrichtung jeweils gegenüberliegenden Flächen des Anschlagnockens bzw. der Aussparung gebildet sind.

Im einzelnen bringt dabei die Möglichkeit, den Stellring und den Schleppring je für sich am Futterkörper anschlagen zu lassen, den Vorteil, daß die beim Schließen und Öffnen ausgeübten hohen Drehmomente unmittelbar nur zwischen dem Stellring und dem Futterkörper zu übertragen sind, der Schleppring also von ihnen freibleibt. Jedoch besteht im Prinzip auch die Möglichkeit, nur für den Schleppring am Futterkörper Anschläge vorzusehen und die die Verdrehung des Stellrings begrenzenden Anschläge zwischen dem Stellring und dem Schleppring auszubilden. Dann erfolgt die Drehbegrenzung des Stellrings gegenüber dem Futterkörper indirekt über den Schleppring, jedoch muß dabei darauf geachtet werden, daß diese Drehbegrenzung auch tatsächlich zur Aufnahme der beim Spannen bzw. Lösen des Bohrfutters auftretenden u. U. sehr großen Drehmomente geeignet ist. Die schon erwähnte Rastvorrichtung zwischen dem Stellring und dem Schleppring allein ist hierzu nicht in der Lage.

Aus der Summe des Winkels, um den der Schleppring gegenüber dem Futterkörper maximal verdrehbar ist, und des maximal möglichen Verdrehungswinkels zwischen dem Schleppring und dem Stellring ergibt sich dann der maximal mögliche Verdrehungswinkel des Stellrings gegenüber dem Futterkörper.

Soweit die Anschläge von Anschlagnocken gebildet sind, empfiehlt es sich im einzelnen, die Anordnung so zu treffen, daß auf dem Futterkörper undrehbar und axial unverschiebbar eine Anschlagscheibe sitzt, die die Anschlagnocken für den Stellring und/oder den Schleppring aufweist und mit einer längs eines mit der Futterachse konzentrischen Kreisbogens verlaufenden Nut versehen ist, in der die als Druck- oder Zugfeder ausgebildete Nachstellfeder liegt, die einerseits an einem der Nutenden und andererseits an einem axial in die Nut vorstehenden Zapfen des Schlepprings gehalten ist.

Im folgenden wird die Erfindung an in der Zeichnung dargestellten Ausführungsbeispielen näher erläutert; es zeigen:
- Fig. 1: ein Bohrfutter nach der Erfindung in einem Axialschnitt, teils in Seitenansicht,
- Fig. 2: den Schnitt II - II in Fig. 1,
- Fig. 3: den Schnitt III - III in Fig. 1,
- Fig. 4: den Schnitt IV - IV in Fig. 1 in einer Abwicklung längs des Futterumfangs,
- Fig. 5: eine andere Ausführungsform des erfindungsgemäßen Bohrfutters in einer der Fig. 1 entsprechenden Darstellung,
- Fig. 6: den Schnitt VI - VI in Fig. 5,
- Fig. 7: den Schnitt VII - VII in Fig. 5,
- Fig. 8: eine weitere Ausführungsform des erfindungsgemäßen Bohrfutters in einer der Fig. 1 entsprechenden Darstellung und
- Fig. 9: den Schnitt IX - IX in Fig. 8.

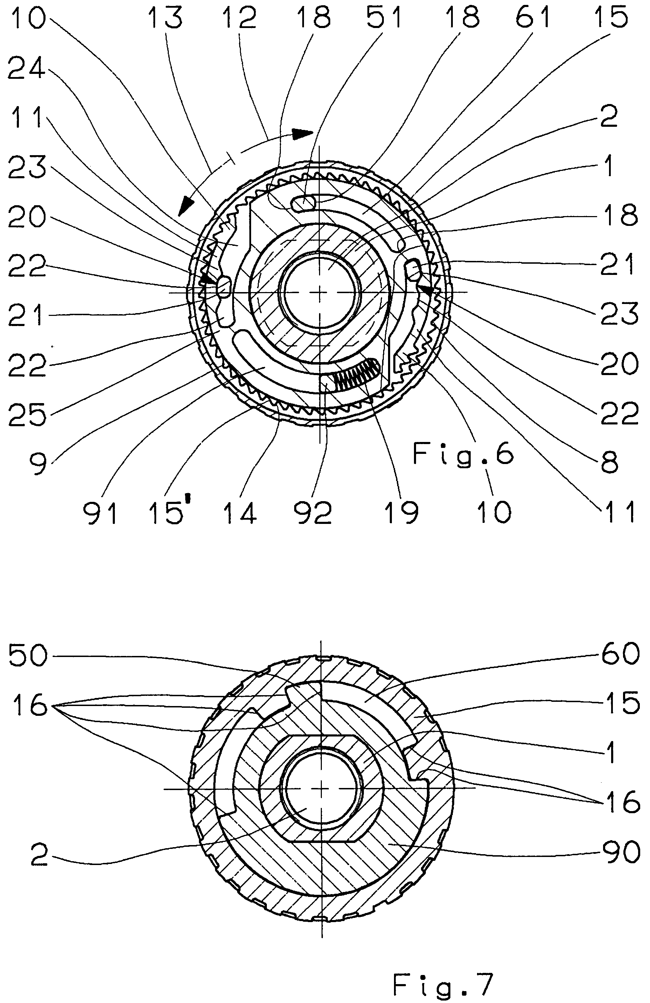

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel besitzt der Futterkörper 1 eine Gewindeaufnahme 2, an die sich nach vorn ein axialer Durchgang 3 anschließen kann, durch den hindurch die Schläge eines in der hohlen Drehspindel verschiebbar geführten Schlägers oder Döppers unmittelbar auf das Schaftende des in der Werkzeugaufnahme 4 des Bohrfutters gehaltenen Bohrers übertragen werden können. Die Bohrfutter besitzen den Bohrer zentrierende, axial führende und/oder einspannende Spannbacken 5, die in der zur Futterachse koaxialen Werkzeugaufnahme 4 zentrisch zur Futterachse verstellbar sind. Die Spannbacken 5 greifen mit einer Verzahnung 6 in eine Innenverzahnung 7 eines Spannrings 8, der am Futterkörper 1 axial unverschiebbar und drehbar geführt ist und zum Spannen und Lösen des Futters von Hand verdreht werden kann. Um unerwünschte Verstellungen der Spannbacken 5 zu verhindern, kann die Drehstellung des Spannrings 8 fixiert werden. Dazu dient eine Sperreinrichtung, die aus einem koaxialen Kranz von Sperrausnehmungen 9 an der inneren Umfangsfläche des Spannrings 8 und aus mindestens einem Sperrglied 10 besteht, das unter der Kraft einer Sperrfeder 11 im wesentlichen radial von innen nach außen in die Sperrausnehmungen 9 greift. Dabei liegen das Sperrglied 10 und die es aufnehmenden Sperrausnehmungen 9 einander in derart geneigten Flankenflächen 14, 15' an, daß diese den Spannring 8 in der dem Öffnen des Bohrfutters entsprechenden Drehrichtung (Pfeil 12) gegen Verdrehen verriegeln, beim Verdrehen des Spannrings 8 in der entgegen
gesetzten, also dem Schließen des Bohrfutters entsprechenden Drehung (Pfeil 13), das Sperrglied 10 aber gegen die Kraft der Sperrfeder 11 aus den Sperrausnehmungen 9 herausdrücken und von Sperrausnehmung zu Sperrausnehmung entlang dem Umfang des Spannrings 8 verrutschen lassen. Am Futterkörper ist weiter drehbar ein koaxialer Stellring 15 geführt, durch dessen Verdrehen in Richtung des Pfeils 13 das Sperrglied 10 in einen Zustand verstellbar ist, indem es außerhalb der Sperrausnehmungen 9 steht, der Spannring 8 also frei und unbehindert durch die Sperreinrichtung relativ zum Futterkörper 1 verdreht werden kann. Diese Stellung des Sperrglieds 10 ist lediglich in Fig. 6 in der rechten Bildhälfte dargestellt. Die Verdrehung des Stellrings 15 relativ zum Futterkörper 1 ist in beiden Drehrichtungen formschlüssig durch Anschläge 16, 16' begrenzt. Weiter ist das Sperrglied 10 an einem Schleppring 17 angeordnet, der koaxial am Futterkörper 1 drehbar und axial unverschiebbar gelagert und durch weitere Anschläge 18 relativ zum Futterkörper 1 auf den für die Nachstellung der Spannbacken gewünschten Drehwinkel begrenzt ist. Den Schleppring 17 beaufschlagt eine zwischen dem Schleppring und dem Futterkörper 1 wirksame Nachstellfeder 19 in Bezug auf den Futterkörper 1 in derselben Drehrichtung (Pfeil 13) wie die des Spannrings 8 beim Schließen des Bohrfutters. Der maximal mögliche Drehweg des Schlepprings 17 relativ zum Futterkörper 1 ist kleiner als der Drehweg des Stellrings 15 relativ zum Futterkörper 1, und zwar um denjenigen Drehweg, um den der Stellring 15 gegenüber dem Schleppring 17 verdreht werden muß, damit das Sperrglied 10 zwischen dem an den Sperrausnehmungen 9 eingerückten Zustand und dem ausgerückten Zustand verstellt wird. Der dabei notwendige Drehsinn bestimmt sich in der Weise, zum Schleppring 17 in der dem Schließen des Bohrfutters entsprechenden Drehrichtung des Spannrings 8 (Pfeil 13) das Sperrglied 10 aus dem eingerückten Zustand in den ausgerückten Zustand und umgekehrt verstellbar ist, wie für die verschiedenen Ausführungsformen im einzelnen noch erläutert werden wird.

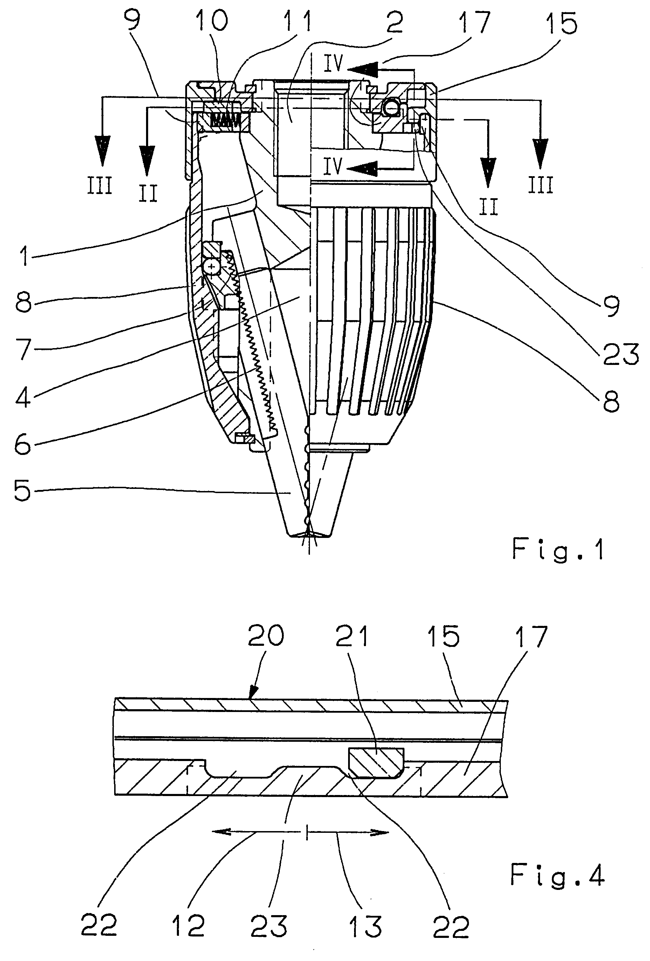

In den Ausführungsbeispielen nach den Fig. 1 bis 7 sind die Anschläge 16, 18 durch am Futterkörper feste Anschlagnocken 50, 51 gebildet, die in je eine Aussparung 60 im Stellring 15 und eine Aussparung 61 im schleppring 17 greifen. Diese Aussparungen 60, 61 erstrecken sich jeweils längs eines mit der Futterachse konzentrischen Kreisbogens und sind in Umfangsrichtung jeweils um den Verdrehungsweg des Stellrings 15 bzw. Schlepprings 17 größer als der jeweils in die Aussparung greifende Anschlagnocken 50, 51, so daß die Anschläge 16, 18 von den sich in Umfangsrichtung jeweils gegenüber liegenden und am Drehwegende aneinander zur Anlage kommenden Flächen der Anschlagnocken 50, 51 bzw. Aussparungen 60, 61 gebildet sind. Die Anschlagnocken 50, 51 sitzen im einzelnen an einer undrehbar und axial unverschiebbar am Futterkörper 1 gehaltenen Anschlagscheibe 90. Sie und der Schleppring 17 sind mit sich gegenüber liegenden Nuten 91 versehen, die längs eines mit der Futterachse konzentrischen Kreisbogen verlaufen und in denen die als Druckfeder ausgebildete Nachstellfeder 19 liegt, die einerseits am Nutende und andererseits an einem axial in die Nuten 91 vorstehenden Zapfen 92 an der Anschlagscheibe 90 oder am Schleppring 17 abgestützt ist.

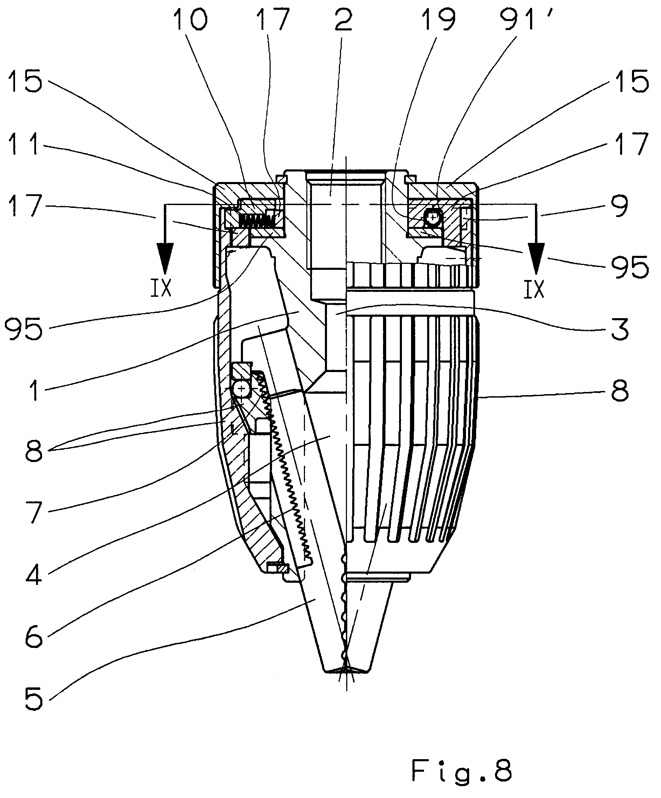

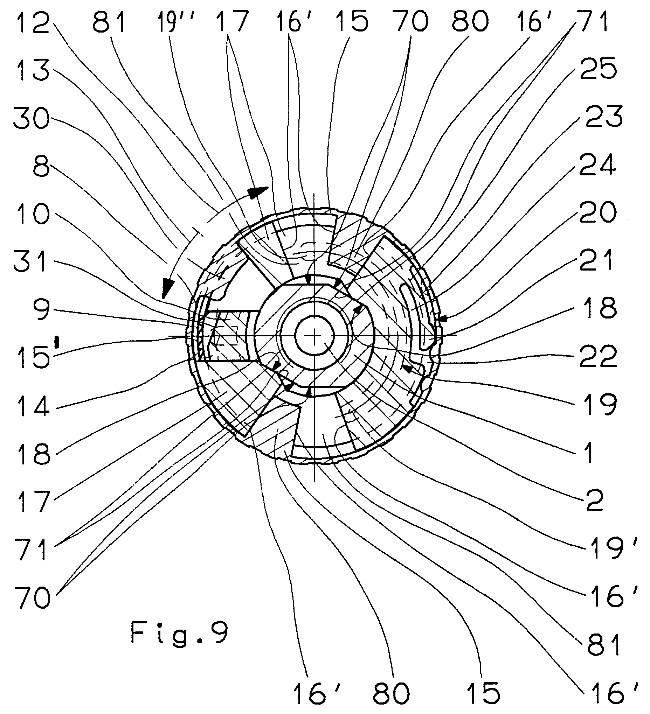

Im Ausführungsbeispiel nach den Fig. 8 und 9 dagegen ist zur Ausbildung der die verdrehung des Schlepprings 17 begrenzenden Anschläge 18 der Futterkörper 1 mit achsenparallelen Planflächen 70 versehen, denen am Schleppring 17 je zwei achsenparallele und zueinander schräge Anschlagflächen 71 gegenüberstehen, die am Drehwegende an den Planflächen 70 zur Anlage kommen. Auf entsprechende direkte Anschläge des Stellrings 15 am Futterkörper 1 ist in diesem Ausführungsbeispiel verzichtet. Die Drehbegrenzung des Stellrings 15 gegenüber dem Futterkörper 1 erfolgt stattdessen indirekt über den Schleppring 17, wozu die die Drehung des Stellrings 15 begrenzenden Anschläge 16' zwischen dem Stellring 15 und dem Schleppring ausgebildet sind. Dazu ist der Stellring 15 mit Anschlagnocken 80 versehen, die in Aussparungen 81 des Schlepprings 17 fassen und am Drehwegende an den Begrenzungsflächen der Aussparungen 81 zur Anlage kommen. Der maximal mögliche Drehweg des Stellrings 15 gegenüber dem Futterkörper 1 ergibt sich dann als Summe der Drehwinkel des Schlepprings 17 gegenüber dem Futterkörper 1 und des Stellrings 15 gegenüber dem Schleppring 17. Die Nachstellfeder 19 liegt hier als Zugfeder in einer Nut 91 des Schlepprings 17 und ist bei 19' am Schleppring 17 und bei 19'' an einer fest mit dem Futterkörper 1 verbundenen Zwischenscheibe 95 befestigt.

Zwischen dem Stellring 15 und dem Schleppring 17 ist eine Rastvorrichtung 20 ausgebildet. Die Rastvorrichtung verfügt über zwei Raststellungen, wobei sich das Sperrglied 10 in der ersten Raststellung die in den Fig. 1 bis 4 und 8, 9 sowie in Fig. 6 in der linken Bildhälfte dargestellt ist, im in die Sperrausnehmungen 9 des Spannrings 8 eingerückten Zustand und in der zweiten Raststellung, dargestellt lediglich in Fig. 6 in der rechten Bildhälfte, im ausgerückten Zustand befindet. Ist die Nachstellfeder 19, wie in allen Ausführungsbeispielen, mit ihren Enden am Futterkörper 1 und am Schleppring 17 gehalten, brauchen von der Rastvorrichtung 20 nur geringe Drehmomente übertragen zu werden, nämlich nur insoweit, wie sie zur gegenseitigen Mitnahme von Stellring 15 und Schleppring 17 erforderlich sind. Ist dagegen die Nachstellfeder 19 mit ihren Enden am Futterkörper 1 und am Stellring 15 gehalten, muß die Kraft der Nachstellfeder 19 vom Stellring 15 über die Rastvorrichtung 20 auf den Schleppring 17 übertragen werden, was voraussetzt, daß die Kraft der Nachstellfeder 19 nicht ausreicht, die Rastvorrichtung 20 aus dem eingerasteten Zustand zu lösen.

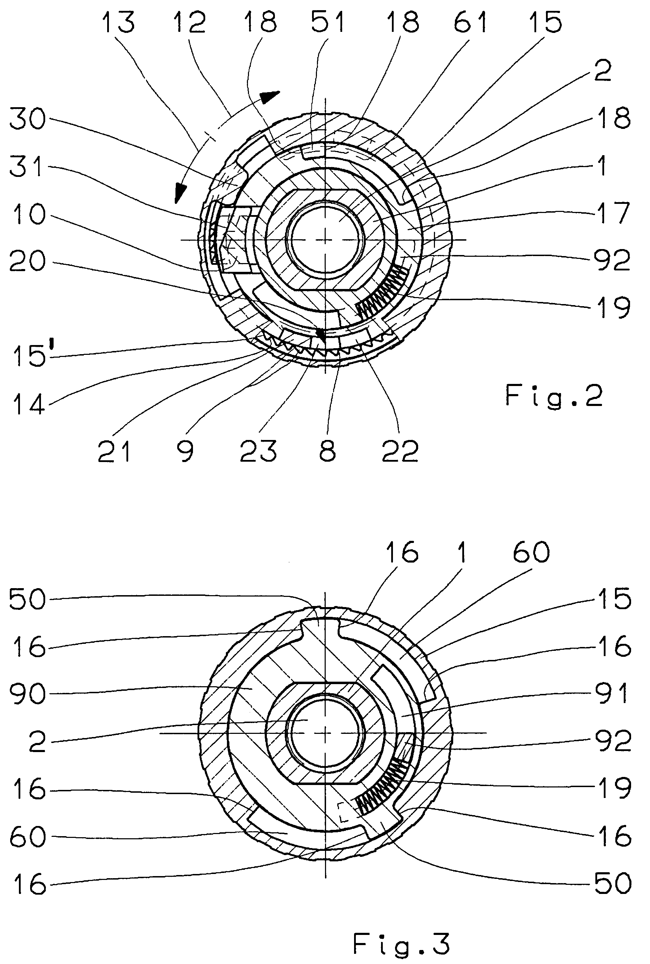

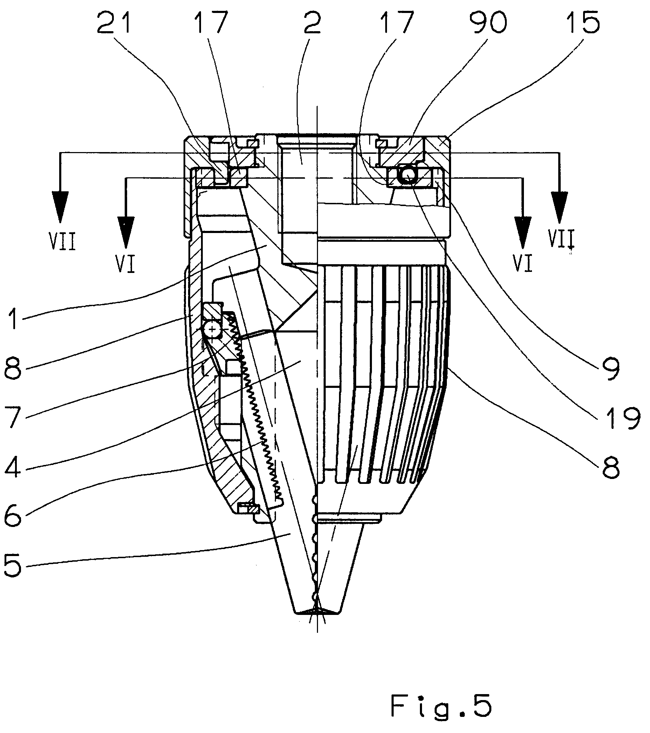

Im einzelnen ist die Rastvorrichtung 20 in allen Ausführungsbeispielen von einem Rastvorsprung 21 und von Rastaufnahmen 22 gebildet, die sich am Stellring 15 und am Schleppring 17 befinden und in den Raststellungen miteinander zum Eingriff kommen. Einer der beiden Ringe in den Ausführungsbeispielen, der Schleppring 17, trägt einen sich in Umfangsrichtung erstreckenden Federsteg 23, an dem sich der Rastvorsprung oder die Rastaufnahmen befinden. Der Federsteg 23 erzeugt durch seine elastische Biegung die für den Rastvorgang benötigte Federkraft und ist in allen Ausführungsbeispielen aus der Wand des Schleppringes 17 frei geschnitten. Im Ausführungsbeispiel nach den Fig. 1 bis 4 federt der Federsteg 23 in axialer Richtung, in den übrigen Ausführungsbeispielen dagegen in radialer Richtung. In diesen letzteren Ausführungsbeispielen, also nach den Fig. 5 bis 9, ist der Federsteg 23 durch einen am einen Ende offenen Schlitz 24 vom Schleppring 17 getrennt und hängt mit diesem nur im Bereich der Stegwurzel 25 zusammen. Das freie Stegende trägt im Ausführungsbeispiel nach den Fig. 8 und 9 den Rastvorsprung 21, der unter einer radial nach außen gerichteten Vorspannung des Federsteges 23 in die am inneren Umfang des Stellrings 15 ausgebildeten Rastaufnahmen 22 greift. Im Ausführungsbeispiel nach den Fig. 5 bis 7 bildet der Federsteg zugleich auch das Sperrglied 10, wobei in diesem Ausführungsbeispiel der Federsteg 23 bzw. das Sperrglied 10 zweifach verteilt über den Futterumfang vorgesehen ist. Das Sperrglied 10 befindet sich jeweils am freien Ende des Federstegs 23. Auf der dem Schlitz 24 zugewandten Stegseite sind die Rastaufnahmen 22 der Rastvorrichtung 20 ausgebidet, deren Rastvorsprung 21 als am Stellring 15 sitzender und axial in den Schlitz 24 eingreifender Rastzapfen ausgebildet ist. Er drückt beim Eingriff in die zum Sperrglied 10 hin liegende Rastaufnahme 22 (Fig. 6 linke Bildhälfte) das Sperrglied 10 radial nach außen in die Sperrausnehmungen 9 des Spannrings 8. Beim Verdrehen des Stellrings 15 gegenüber dem Schleppring 17 verstellt sich der Rastzapfen 21 im Schlitz 24 zum geschlossenen Schlitzende hin in die in Fig. 6, rechte Bildhälfte, gezeigte Stellung, in der der Federsteg 23 sich unter der Wirkung seiner Federvorspannung radial einwärts verstellt und das Sperrglied 10 aus den Sperrausnehmungen 9 ausrückt. Ersichtlich können bei dieser Ausführungsform die Federkraft für die Raststellungen der Rastvorrichtung 20 einerseits und die Federkraft für die Verstellung des Sperrglieds 10 zum Eingriff in die Sperrausnehmungen des Spannrings 8 andererseits nicht unabhängig voneinander gewählt werden. Bei den Ausführungsbeispielen nach den Fig. 1 bis 4 und 8 und 9 besteht diese Beschränkung nicht. Hier ist das Sperrglied 10 als am Schleppring 17 radial geführter Schieber ausgebildet, der unter der radialen Kraft der Sperrfeder 11 steht. Zum Verstellen des Sperrglieds 10 in den ausgerückten Zustand ist am Stellring 15 ein Steuernocken 30 und am Sperrglied 10 eine Steuerkurve 31 vorgesehen. Wird der Stellring in den Fig. 2 und 9 in der dem Schließen des Bohrfutters entsprechenden Drehrichtung (Pfeil 13) verdreht, kommt der Steuernocken 30 an der Steuerfläche 31 des Sperrglieds 10 zur Anlage und schiebt das Sperrglied 10 gegen die Kraft der Sperrfeder 11 radial bis zum Austritt des Sperrglieds 10 aus den Seprrausnehmungen 9 am Spannring 8 zurück.

Da bei allen in der Zeichnung dargestellten Ausführungsbeispielen der Eingriff des Rastgliedes 10 in die Sperrausnehmungen 9 des Spannrings 8 im wesentlichen radial erfolgt, sind entsprechend auch in allen Ausführungsbeispielen die Sperrausnehmungen im axialen Profil sägezahnförmig ausgebildet. In die Sperrausnehmungen 9 greift das Sperrglied 10 mit entsprechend ausgebildeten Sägezähnen ein. In der Drehrichtung des Schlepprings 17 gegenüber dem Spannring 8, die dessen Drehrichtung zum Schließen des Bohrfutters entspricht (Pfeil 13) läuft die steile Flankenfläche (oder Zahnbrust) 14 der Sägezähne der flacheren Flankenfläche (oder Zahnrücken) 15' voran. Steht also das Sperrglied 10 im Eingriff am Spannring 8, wird der Spannring 8 in Richtung des Pfeiles 13 vom Sperrglied 10 formschlüssig mitgenommen, bzw. gegen Verdrehen in Richtung des Pfeiles 12 durch das Sperrglied 10 gesichert. Jedoch kann sich der Sapnnring 8 gegenüber dem im Eingriff stehenden Sperrglied 10 in Richtung des Pfeiles 13, bzw. das Sperrglied 10 gegenüber dem feststehenden Spannring 8 in Richtung des Pfeiles 12 verstellen, wobei das Sperrglied 10 auf den flachen Zahnrücken 15 über die Sperrausnehmungen 9 hinwegrutscht.

Die Funktionsweise des erfindungsgemäßen Bohrfutters sei anhand des Ausführungsbeispiels nach den Fig. 1 bis 4 wie folgt kurz erläutert: Das Bohrfutter ist im geschlossenen und gespannten Zustand gezeigt. Es kann jederzeit von Hand nachgespannt werden, wozu bei festgehaltenem Stellring 15 der Spannring 8 in Richtung des Pfeiles 13 gedreht wird. Bei dieser Drehung wird der Futterkörper 1 über die Anschläge 16 gegen Mitdrehen festgehalten. Der Schleppring 17 und damit das Sperrglied 10 ist durch die Anschläge 18 gegen Verdrehen in Richtung des Pfeiles 12 gesichert, entsprechend also auch der Spannring 8 durch das Sperrglied 10. Das Bohrfutter kann sich somit nicht öffnen. Lockert sich die Bohrereinspannung, weil sich beim Bohrbetrieb die Spannbacken 5 in den Bohrerschaft eindrücken, verdreht die gespannte Nachstellfeder 19 über den Zapfen 92, den Schleppring 17 und das Sperrglied 10 den Spannring 8 in Richtung des Pfeils 13, wobei sich der durch die Rastvorrichtung 20 mit dem Schleppring 17 verbundene Stellring entsprechend mitdreht. - Zum Öffnen des Bohrfutters wird bei festgehaltenem Stellring 15 der Spannring 8 in Richtung des Pfeils 12 verdreht. Da das Bohrfutter dabei noch in sich verspannt ist, dreht sich der Futterkörper 1 mit, ebenso der Schleppring 17 über das noch im Eingriff in den Sperrausnehmungen 9 stehende Sperrglied 10. Dabei bewegt sich der Rastvorsprung 21 in der Fig. aus der rechten Rastaufnahme 22 heraus nach links. Sobald das Sperrglied 10 beim weiteren Verdrehen des Spannrings 8 am Steuernocken 30 aus den Sperrausnehmungen 9 ausgerückt ist, wird der Schleppring 17 nicht mehr weiter vom Spannring 8 mitgenmmen, wohl aber der Futterkörper 1, weil das Bohrfutter noch immer gespannt ist. Im weiteren Verlauf kommt der Anschlagnocken 51 in Richtung des Pfeiles 12 am Ende der Aussparung 18 zur Anlage, der Schleppring 17 wird unter Spannung der Nachstellfeder 19 noch mitgenommen, bis der Rastvorsprung 21 vollständig in die in Fig. 4 linke Rastaufnahme 22 eingetreten ist. Außerdem kommen die Anschlagnocken 50 in Richtung des Pfeils 12 an den Enden der Aussparungen 60 zur Anlage, wodurch jetzt der Futterkörper 1 gegen weiteres Mitdrehen festgehalten wird und das Bohrfutter durch weiteres Verdrehen des Spannrings 8 in Richtung des Pfeils 12 vollständig gelöst und geöffnet werden kann.

## Patentansprüche

1. Bohrfutter, insbes. zum Schlagbohren, mit einem an eine Bohrspindel anschließbaren Futterkörper (1), mit zwischen sich eine Aufnahme (4) für das Bohrwerkzeug bildenden Spannbacken (5), die zum Öffnen und Schließen des Bohrfutters durch einen am Futterkörper (1) drehbar geführten Spannring (8) verstellbar sind, ferner mit einer Sperreinrichtung für den Spannring (8), bestehend aus einem koaxialen Kranz von Sperrausnehmungen (9) am Spannring (8) und aus mindestens einem Sperrglied (10), das unter der Kraft einer Sperrfeder (11) im wesentlichen radial von innen nach außen in die Sperrausnehmungen (9) eingerückt ist, wobei das Sperrglied (10) und die Sperrausnehmungen (9) einander in derart geneigten Flankenflächen (14, 15') anliegen, daß diese den Spannring (8) in der dem Öffnen des Bohrfutters entsprechenden Drehrichtung gegen Verdrehen sperren, beim Verdrehen des Spannrings (8) in der entgegen gesetzten, also dem Schließen des Bohrfutters entsprechenden Drehrichtung aber das Sperrglied (10) gegen die Kraft der Sperrfeder (11) aus den Sperrausnehmungen (9) herausdrücken und dadurch von Sperrausnehmung zu Sperrausnehmung verrutschen lassen, und mit einem am Futterkörper (1) drehbar geführten koaxialen Stellring (15), durch dessen Verdrehen das Sperrglied (10) in einen aus den Sperrausnehmungen (9) ausgerückten Zustand verstellbar ist, dadurch gekennzeichnet, daß Anschläge (16, 16') vorgesehen sind, welche die Verdrehung des Stellrings (15) relativ zum Futterkörper (1) in beiden Drehrichtungen formschlüssig begrenzen, daß das Sperrglied (10) an einem Schleppring (17) angeordnet ist, der koaxial am Futterkörper (1) drehbar gelagert ist, daß eine zwischen dem Schleppring (17) und dem Futterkörper (1) wirksame Nachstellfeder (19) den Schleppring (17) in Bezug auf den Futterkörper (1) in derselben Drehrichtung wie die des Spannrings (8) beim Schließen des Bohrfutters beaufschlagt, daß weitere Anschläge (18) vorgesehen sind, welche die Verdrehung des Schlepprings (17) relativ zum Futterkörper (1) auf die Größe des für die Nachstellung der Spannbacken (5) gewünschten Drehwegs des Spannrings (8) begrenzen, und daß der maximal mögliche Drehweg des Stellrings (15) gegenüber dem des Schlepprings (17), jeweils bezogen auf den Futterkörper (1), mindestens um soviel größer ist, wie der Stellring (15) und der Schleppring (17) gegeneinander verdreht werden müssen, um das Sperrglied (10) zwischen dem an den Sperrausnehmungen (9) eingerückten Zustand und dem ausgerückten Zustand zu verstellen, wobei durch Verdrehen des Stellrings (15) in der dem Schließen des Bohrfutters entsprechenden Drehrichtung des Spannrings (8) das Sperrglied (10) sich aus dem eingerückten Zustand in den ausgerückten Zustand und umgekehrt verstellt.

2. Bohrfutter nach Anspruch 1, dadurch gekennzeichnet, daß zwischen dem Stellring (15) und dem Schleppring (17) eine in Umfangsrichtung zwei Raststellungen aufweisende Rastvorrichtung (20) ausgebildet ist, wobei sich das Sperrglied (10) in der einen Raststellung in dem an den Sperrausnehmungen (9) des Spannrings (8) eingerückten Zustand und in der anderen Raststellung im ausgerückten Zustand befindet.

3. Bohrfutter nach Anspruch 2, dadurch gekennzeichnet, daß die Nachstellfeder (19) mit ihren Enden unmittelbar am Futterkörper (1) und am Schleppring (17) gehalten ist.

4. Bohrfutter nach Anspruch 2, dadurch gekennzeichnet, daß die Nachstellfeder (19) mit ihren Enden unmittelbar am Futterkörper (1) und am Stellring (15) gehalten ist und die Kraft der Nachstellfeder (19) nicht ausreicht, die Rastvorrichtung (20) aus dem eingerasteten Zustand zu lösen.

5. Bohrfutter nach einem der Ansprüche 2 bis 4, dadurch gekennzeichnet, daß die Rastvorrichtung (20) von in den Raststellungen miteinander zum Eingriff kommenden Rastelementen, Rastvorsprung (21) oder Rastaufnahme (22), am Stellring (15) und am Schleppring (17) gebildet ist, und daß einer dieser beiden Ringe einen sich in Umfangsrichtung erstreckenden Federsteg (23) aufweist, an dem sich mindestens eines der Rastelemente (21, 22) befindet.

6. Bohrfutter nach Anspruch 5, dadurch gekennzeichnet, daß der Federsteg (23) aus der Wand des ihn jeweils tragenden Ringes (15, 17) freigeschnitten ist.

7. Bohrfutter nach Anspruch 5 oder 6, dadurch gekennzeichnet, daß der durch einen am einen Ende offenen Schlitz (24) vom Schleppring (17) getrennte und radial elastisch biegbare Federsteg (23) am freien Stegende das Sperrglied (10) trägt, daß das am Federsteg (23) vorgesehene Rastelement als auf der dem Schlitz (24) zugewandten Stegseite angeordnete Rastaufnahme (22) ausgebildet ist, und daß der Rastvorsprung (21) als am Stellring (15) sitzender, axial in den Schlitz (24) eingreifender Rastzapfen ausgebildet ist, der beim Eingriff in die Rastaufnahme (22) das Sperrglied (10) in die Sperrausnehmungen (9) des Spannrings (8) drückt und beim Verdrehen des Stellrings (15) gegenüber dem Schleppring (17) im Schlitz (24) zwischen der Rastaufnahme (22) und dem geschlossenen Schlitzende verstellbar ist.

8. Bohrfutter nach einem der Ansprüche 1 bis 6, dadurch gekennzeichnet, daß das Sperrglied (10) als am Schleppring (17) radial geführter Schieber ausgebildet ist.

9. Bohrfutter nach Anspruch 8, dadurch gekennzeichnet, daß zum Verstellen des Sperrglieds (10) in den ausgerückten Zustand am Stellring (15) ein Steuernocken (30) und am Sperrglied (10) eine Steuerkurve (31) vorgesehen ist, an der der Steuernocken (30) beim Verdrehen des Stellrings (15) gegenüber dem Schleppring (17) zur Anlage kommt.

10. Bohrfutter nach einem der Ansprüche 7 bis 9, dadurch gekennzeichnet, daß die Sperrausnehmungen (9) am Spannring (8) im axialen Profil sägezahnförmig ausgebildet sind, in die das Sperrglied (10) mit entsprechend ausgebildeten Sägezähnen eingreift, wobei in der Drehrichtung des Schlepprings (17) gegenüber dem Spannring (8), die dessen Drehrichtung zum Schließen des Bohrfutters entspricht, die steile Zahnbrust (14) der Sägezähne der flacheren Zahnrücken (15') voranläuft.

11. Bohrfutter nach einem der Ansprüche 1 bis 10, dadurch gekennzeichnet, daß zur Ausbildung der die Verdrehung des Stellrings (15) und/oder des Schlepprings (17) gegenüber dem Futterkörper (1) jeweils begrenzenden Anschläge (16, 18) der Futterkörper (1) mindestens eine achsenparallele Planfläche (70) aufweist, der am Stellring (15) bzw. Schleppring (17) je zwei achsenparallele und zueinander schräge Anschlagflächen (71) gegenüberstehen, die durch ihre gegenseitige Schrägstellung den Winkel bestimmen, um den der Stellring (15) bzw. Schleppring (17) jeweils gegenüber dem Futterkörper (1) maximal verdrehbar ist.

12. Bohrfutter nach einem der Ansprüche 1 bis 10, dadurch gekennzeichnet, daß der Futterkörper (1) Anschlagnocken (50, 51) trägt, die je in eine Aussparung (60, 61) im Stellring (15) und/oder Schleppring (17) greifen, wobei die Aussparungen (60, 61) sich jeweils längs eines mit der Futterachse konzentrischen Kreisbogens erstrecken und in Umfangsrichtung um den Verdrehungsweg des Stellrings (15) bzw. Schlepprings (17) größer als der jeweils in die Aussparung (60, 61) greifende Anschlagnocken (50, 51) sind, so daß die Anschläge (16, 18) zur Drehbegrenzung des Stellrings (15) bzw. Schlepprings (17) von den sich in Umfangsrichtung jeweils gegenüberliegenden Flächen des Anschlagnockens (50, 51) bzw. der Aussparung (60, 61) gebildet sind.

13. Bohrfutter nach Anspruch 11 oder 12, dadurch gekennzeichnet, daß bei nur für den Schleppring (17) am Futterkörper (1) vorgesehenen Anschlägen (18) die die Verdrehung des Stellrings (15) begrenzenden Anschläge (16') zwischen dem Stellring (15) und dem Schleppring (17) ausgebildet sind.

14. Bohrfutter nach Anspruch 12, dadurch gekennzeichnet, daß auf dem Futterkörper (1) undrehbar und axial unverschiebbar eine Anschlagscheibe (90) sitzt, die die Anschlagnocken (50, 51) für den Stellring (15) und/oder den Schleppring (17) aufweist und mit einer längs eines mit der Futterachse konzentrischen Kreisbogens verlaufenden Nut (91) versehen ist, in der die als Druck- oder Zugfeder ausgebildete Nachstellfeder (19) liegt, die einerseits an einem der Nutenden und andererseits an einem axial in die Nut (91) vorstehenden Zapfen (92) des Schlepprings (17) oder der Anschlagscheibe (90) gehalten ist.

15. Bohrfutter nach einem der Ansprüche 1 bis 14, dadurch gekennzeichnet, daß der Spannring (8) und der Stellring (15) axial nebeneinander am Futterkörper (1) angeordnet sind und gemeinsam den Futterkörper (1) seiner ganzen axialen Länge nach überdecken.

## Claims

1. A drilling chuck, in particular for hammer drilling, having a chuck body (1) which can be connected to a drilling spindle, clamping jaws (5) which form between them a receiving means (4) for the drilling tool and which for opening and closing of the drilling chuck are displaceable by a clamping ring (8) rotatably guided on the chuck body (1), further having a locking device for the clamping ring (8) comprising a coaxial ring of locking openings (9) on the clamping ring (8) and at least one locking member (10) which is engaged substantially radially outwardly into the locking openings (9) under the force of a locking spring (11), wherein the locking member (10) and the locking openings (9) bear against each other at flank surfaces (14, 15') which are inclined in such a way that they lock the clamping ring (8) to prevent it from rotating in the direction of rotation corresponding to opening of the drilling chuck but when the clamping ring (8) is rotated in the opposite direction of rotation which therefore corresponds to closing of the drilling chuck they urge the locking member (10) out of the locking openings (9) against the force of the locking spring (11) and thereby cause it to slip from one locking opening to another, and having a coaxial setting ring (15) which is guided rotatably on the chuck body (1) and by the rotation of which the locking member (10) can be displaced into a condition of being disengaged from the locking openings (9), characterised in that there are provided abutments (16, 16') which positively lockingly limit the rotary movement of the setting ring (15) relative to the chuck body (1) in both directions of rotation, that the locking member (10) is arranged on a drag ring (17) which is rotatably mounted coaxially on the chuck body (1), that a re-adjusting spring (19) operative between the drag ring (17) and the chuck body (1) urges the drag ring (17) relative to the chuck body (1) in the same direction of rotation as that of the clamping ring (8) when closing the drilling chuck, that there are provided further abutments (18) which limit the rotary movement of the drag ring (17) relative to the chuck body (1) to the magnitude of the rotary movement of the clamping ring (8), that is desired for re-adjusting the clamping jaws (5), and that the maximum possible rotary movement of the setting ring (15) relative to that of the drag ring (17), in each case with respect to the chuck body (1), is at least so much greater as the setting ring (15) and the drag ring (17) have to be rotated relative to each other in order to displace the locking member (10) between the condition of being engaged at the locking openings (9) and the disengaged condition, wherein the locking member (10) is displaced out of the engaged condition into the disengaged condition and vice-versa by rotary movement of the setting ring (15) in the direction of rotation of the clamping ring (8), which corresponds to closing of the drilling chuck.

2. A drilling chuck according to claim 1 characterised in that a retaining device (20) which has two retaining positions in the peripheral direction is provided between the setting ring (15) and the drag ring (17), wherein the locking member (10) is in the condition of being engaged at the locking openings (9) of the clamping ring (8) in the one retaining position and it is in the disengaged condition in the other retaining position.

3. A drilling chuck according to claim 2 characterised in that the re-adjusting spring (19) is held with its ends directly to the chuck body (1) and to the drag ring (17).

4. A drilling chuck according to claim 2 characterised in that the re-adjusting spring (19) is held with its ends directly to the chuck body (1) and to the setting ring (15) and the force of the re-adjusting spring (19) is not enough to release the retaining device (20) from the retained condition.

5. A drilling chuck according to one of claims 2 to 4 characterised in that the retaining device (20) is formed by retaining elements which come into engagement with each other in the retaining positions, a retaining projection (21) or a retaining receiving means (22), on the setting ring (15) and on the drag ring (17), and that one of those two rings has a spring limb (23) which extends in the peripheral direction and on which at least one of the retaining elements (21, 22) is disposed.

6. A drilling chuck according to claim 5 characterised in that the spring limb (23) is cut free from the wall of the ring (15, 17) respectively carrying it.

7. A drilling chuck according to claim 5 or claim 6 characterised in that the spring limb (23) which is radially resiliently bendable and which is separate from the drag ring (17) by a slot (24) which is open at one end carries the locking member (10) at the free end of the limb, that the retaining element provided on the spring limb (23) is in the form of a retaining receiving means (22) arranged on the side of the limb which is towards the slot (24), and that the retaining projection (21) is in the form of a retaining peg which is disposed on the setting ring (15) and which axially engages into the slot (24) and which upon engagement into the retaining receiving means (22) urges the locking member (10) into the locking openings (9) in the clamping ring (8) and is displaceable upon rotation of the setting ring (15) relative to the drag ring (17) in the slot (24) between the retaining receiving means (22) and the closed end of the slot.

8. A drilling chuck according to one of claims 1 to 6 characterised in that the locking member (10) is in the form of a slider radially guided on the drag ring (17).

9. A drilling chuck according to claim 8 characterised in that for displacement of the locking member (10) into the disengaged condition provided on the setting ring (15) is a control projection (30) and provided on the locking member (10) is a control cam (31) against which the control projection (30) comes to bear upon rotation of the setting ring (15) relative to the drag ring (17).

10. A drilling chuck according to one of claims 7 to 9 characterised in that the locking openings (9) on the clamping ring (8) are of a sawtooth-shape in axial profile and into which the locking member (10) engages with sawteeth of a corresponding configuration, wherein in the direction of rotation of the drag ring (17) relative to the clamping ring (8) which corresponds to the direction of rotation thereof for closing of the drilling chuck, the steep tooth front face (14) of the sawteeth precedes the shallower tooth back face (15').

11. A drilling chuck according to one of claims 1 to 10 characterised in that to provide the abutments (16, 18) which respectively limit the rotary movement of the setting ring (15) and/or the drag ring (17) relative to the chuck body (1) the chuck body (1) has at least one planar surface (70) which is parallel to the axis and opposite which are disposed on each of the setting ring (15) and the drag ring (17) two abutment surfaces (71) which are parallel to the axis and which are inclined relative to each other and which by virtue of their mutual inclined positioning determine the angle through which the setting ring (15) and the drag ring (17) respectively are rotatable at a maximum relative to the chuck body (1).

12. A drilling chuck according to one of clams 1 to 10 characterized in that the chuck body (1) has abutment projections (50, 51) which each engage into a respective recess (60, 61) in the setting ring (15) and/or the drag ring (17), wherein the recesses (60, 61) each extend along a respective circular arc which is concentric with the axis of the chuck and are greater in the peripheral direction by the rotational motion of the setting ring (15) and the drag ring (17) respectively than the respective abutment projection (50, 51) which engages into the recess (60, 61) so that the abutments (16, 18) for limiting the rotary movement of the setting ring (15) and the drag ring (17) respectively are formed by the surfaces, which are respectively disposed in opposite relationship in the peripheral direction, of the abutment projection (50, 51) and the recess (60, 61) respectively.

13. A drilling chuck according to claim 11 or claim 12 characterised in that in the case of abutments (18) which are provided only for the drag ring (17) on the chuck body (1) the abutments (16') for limiting the rotary movement of the setting ring (15) are provided between the setting ring (15) and the drag ring (17).

14. A drilling chuck according to claim 12 characterised in that an abutment disc (90) is non-rotatably and axially immovably disposed on the chuck body (1), the abutment disc having the abutment projections (50, 51) for the setting ring (15) and/or the drag ring (17) and being provided with a groove (91) which extends along a circular arc concentric with the axis of the chuck and in which is disposed the re-adjusting spring (19) which is in the form of a compression or tension spring and which is held on the one hand at one of the ends of the groove and on the other hand at a projection (92) on the drag ring (17) or the abutment disc (90), said projection projecting axially into the groove (91).

15. A drilling chuck according to one of claims 1 to 14 characterised in that the clamping ring (8) and the setting ring (15) are arranged in axially side-by-side relationship on the chuck body (1) and jointly cover over the chuck body (1) over its entire axial length.

## Revendications

1. Mandrin de perçage, notamment pour le perçage à percussion, comportant un corps de mandrin (1) pouvant être raccordé à une broche de perçage, des mâchoires de serrage (5) définissant entre elles un logement (4) pour l'outil de perçage et qui peuvent être déplacées pour l'ouverture et la fermeture du mandrin de perçage, par une bague de serrage (8) guidée de manière à pouvoir tourner sur le corps (1) du mandrin, et en outre un dispositif de blocage pour la bague de serrage (8), constitué par une couronne coaxiale d'évidement de blocage (9) sur la bague de serrage (8) et par au moins un organe de blocage (10), qui, sous la force d'un ressort de blocage (11), est repoussé essentiellement radialement de l'intérieur vers l'extérieur dans les évidements de blocage (9), et dans lequel il existe une application réciproque entre l'organe de blocage (10) et les évidements de blocage (9) au niveau de surfaces inclinées de flancs (14,15') de telle sorte que ces surfaces bloquent la bague de serrage (8) contre toute rotation, dans le sens de rotation qui correspond à l'ouverture du mandrin de perçage, mais dégagent l'organe de blocage (10) des évidements de blocage (9) à l'encontre de la force du ressort de blocage (11), lors d'une rotation de la bague de serrage (8) dans le sens de rotation opposé, c'est-à-dire qui correspond à la fermeture du mandrin de serrage, et de ce fait peuvent glisser d'un évidement de blocage au suivant, et comportant une bague coaxiale de réglage (15), guidée de manière à pouvoir tourner sur le corps (1) du mandrin et sous l'effet de la rotation de laquelle l'organe de blocage (10) peut être réglé dans un état dégagé des évidements de blocage (9), caractérisé en ce qu'il est prévu des butées (16,16'), qui limitent la rotation de la bague de réglage (15) par rapport au corps (1) du mandrin dans les deux sens de rotation, selon une liaison par formes complémentaires, que l'organe de blocage (10) est disposé sur une bague d'entraînement (17), qui est montée de manière à pouvoir tourner coaxialement sur le corps du mandrin (1), qu'un ressort de rattrapage de jeu (19) agissant entre la bague d'entraînement (17) et le corps (1) du mandrin charge la bague d'entraînement (17), par rapport au corps (1) du mandrin, dans le même sens de rotation que celui de la bague de serrage (8) lors de la fermeture du mandrin de perçage, qu'il est prévu d'autres butées (18), qui limitent la rotation de la bague d'entraînement (17) par rapport au corps (1) du mandrin, à l'étendue de la course de rotation de la bague de serrage (8), qui est souhaitée pour le rattrapage de jeu des mâchoires de serrage (5), et que la course de rotation maximale possible de la bague de réglage (15) est supérieure à la course de rotation de la bague d'entraînement (17), d'une manière respectivement rapportée au corps (1) du mandrin, et ce au moins d'une distance sur laquelle la bague de réglage (15) et la bague d'entraînement (17) doivent pivoter l'une par rapport a l'autre pour déplacer l'organe de blocage (10) entre l'état engagé dans les évidements de blocage (9) et l'état dégagé, auquel cas, sous l'effet de la rotation de la bague de réglage (15) dans le sens de rotation de la bague de serrage (8), qui correspond à la fermeture du mandrin de perçage, l'organe de blocage (10) est déplacé inversement depuis l'état engagé dans l'état dégagé.

2. Mandrin de perçage selon la revendication 1, caractérisé an ce qu'entre la bague de réglage (15) et la bague d'entraînement (17) est prévu un dispositif d'encliquetage (20) qui comporte deux positions d'encliquetage dans la direction circonférentielle, auquel cas, dans une position d'encliquetage, l'organe de blocage (10) est dans l'état engagé dans les évidements de blocage (9) de la bague de serrage (8) alors que dans l'autre position d'encliquetage, il se trouve dans l'état dégagé de ces évidements.

3. Mandrin de perçage selon la revendication 2, caractérisé en ce que le ressort de rattrapage de jeu (19) est retenu, par ses extrémités, directement sur le corps du mandrin (1) et sur la bague d'entraînement (17).

4. Mandrin de perçage selon la revendication 2, caractérisé en ce que le ressort de rattrapage de jeu (19) est retenu par ses extrémités, directement sur le corps (1) du mandrin et sur la bague de réglage (15), et la force du ressort de rattrapage de jeu (19) ne suffit pas pour dégager le dispositif d'encliquetage (20), de l'état encliqueté.

5. Mandrin de perçage selon l'une des revendications 2 à 4, caractérisé en ce que le dispositif d'encliquetage (20) est formé par des éléments d'encliquetage, un organe saillant d'encliquetage (21) ou un logement d'encliquetage (22), situés sur la bague de réglage (15) et sur la bague coulissante (17) et qui viennent réciproquement en prise dans les positions d'encliquetage, et que l'une de ces deux bagues possède une barrette formant ressort (23) qui s'étend dans la direction circonférentielle et sur laquelle est situé au moins l'un des éléments d'encliquetage (21, 22).

6. Mandrin de perçage selon la revendication 5, caractérisé en ce que la barrette formant ressort (23) est découpée à partir de la paroi de la bague (15,17), qui la porte respectivement.

7. Mandrin de perçage selon la revendication 5 ou 6, caractérisé en ce que la barrette formant ressort (23), qui est séparée de la bague d'entraînement (17) par une fente (24) ouverte à l'une de ses extrémités, et peut fléchir élastiquement dans le sens radial, porte, sur son extrémité libre, l'organe de blocage (10), que l'élément d'encliquetage prévu sur la barrette formant ressort (23) est agencé sous la forme d'un logement d'encliquetage (22) formé sur le côté de la barrette tourné vers la fente (24) et que l'appendice saillant d'encliquetage (21) est réalisé sous la forme d'un téton d'encliquetage, qui prend appui sur la bague de réglage (15), s'engage axialement dans la fente (24) et qui, lors de son engagement dans l'évidement d'encliquetage (22), repousse l'organe de blocage (10) dans les évidements de blocage (9) de la bague de serrage (8) et, lors de la rotation de la bague de réglage (15) par rapport à la bague d'entraînement (17), peut être déplacé dans la fente (24) présente entre le logement d'encliquetage (22) et l'extrémité fermée de la fente.

8. Mandrin de perçage selon l'une des revendications 1 à 6, caractérisé en ce que l'organe de blocage (10) est agencé sous la forme d'un poussoir guidé radialement sur la bague d'entraînement (17).

9. Mandrin de perçage selon la revendication 8, caractérisé en ce que pour amener l'organe de réglage (10) à l'état dégagé, une came de commande (30) est prévue sur l'organe de réglage (15) tandis que sur l'organe de blocage (10) est prévue une came de commande (31), sur laquelle la came de commande (30) vient s'appliquer lors d'une rotation de la bague de réglage (15) par rapport à la bague d'entraînement (17).

10. Mandrin de perçage selon l'une des revendications 7 à 9, caractérisé en ce que sur la bague de serrage (8) sont formés, avec un profil axial en dents de scie, les évidements de blocage (9), dans lesquels l'organe de blocage (10) s'engage avec des dents de scie formées de façon correspondante, la face d'attaque pentue (14) des dents de scie étant située en avant des dos plus plats (15') des dents, dans le sens de rotation de la bague d'entraînement (17) par rapport à la bague de serrage (8), qui correspond au sens de rotation de cette bague pour la fermeture du mandrin de perçage.

11. Mandrin de perçage selon l'une des revendications 1 à 10, caractérisé en ce que pour la réalisation des butées (16,18), qui limitent respectivement la rotation de la bague de réglage (15) et/ou de la bague d'entraînement (17) par rapport au corps (1) du mandrin, ce corps (1) du mandrin possède au moins une surface plane (70) parallèle à l'axe et en vis-à-vis de laquelle sont disposées, sur la bague de réglage (15) et sur la bague d'entraînement (17), respectivement deux surfaces de butée (71) qui sont parallèles à l'axe et obliques l'une par rapport à l'autre et qui déterminent, par leur position oblique réciproque, l'angle, sur lequel la bague de réglage (15) ou la bague d'entraînement (17) peut tourner au maximum respectivement par rapport au corps (1) du mandrin.

12. Mandrin de perçage selon l'une des revendications 1 à 10, caractérisé en ce que le corps (1) du mandrin porte des cames de butée (50,51), qui s'engagent dans des évidements respectifs (60,61) aménagés dans la bague de réglage (15) et/ou dans la bague d'entraînement (17), les évidements (60,61) s'étendant respectivement le long d'un arc de cercle concentrique par rapport à l'axe du mandrin et étant plus longs, dans la direction circonférentielle, que les cames de butée (50,51) qui s'engagent respectivement dans l'évidement (60,61), et ce de la course de rotation de la bague de réglage (15) ou de la bague d'entraînement (17), de sorte que les butées (16,18) servant à limiter la rotation de la bague de réglage (15) ou de la bague d'entraînement (17), sont formées par les surfaces, qui sont situées respectivement en vis-à-vie dans la direction circonférentielle, de la came de butée (50,51) et de l'évidement (60, 61).

13. Mandrin de perçage selon la revendication 11 ou 12, caractérisé en ce que dans le cas de butées (18) prévues uniquement pour la bague d'entraînement (17) sur le corps (1) du mandrin, les butées (16'), qui limitent la rotation de la bague de réglage (15), sont formées entre la bague de réglage (15) et la bague d'entraînement (17).

14. Mandrin de perçage selon la revendication 12, caractérisé en ce que sur le corps (1) du mandrin est monté, sans possibilité de déplacement axial, un disque de butée (90), qui possède les cames de butée (50,51) pour la bague de réglage (15) et/ou la bague d'entraînement (17) et est équipée d'une gorge (91) qui s'étend le long d'un arc de cercle concentrique à l'axe du mandrin et dans laquelle est situé le ressort de rattrapage de jeu (19), qui est agencé sous la forme d'un ressort de compression ou d'un ressort de traction et qui est retenu d'une part à l'une des extrémités de la gorge et d'autre part sur un téton (92), qui pénètre axialement dans la gorge (91), de la bague d'entraînement (17) ou de la bague de butée (90).

15. Mandrin de perçage selon l'une des revendications 1 à 14, caractérisé en ce que la bague de serrage (8) et la bague de réglage (15) sont disposées axialement côte-à-côte sur le corps (1) du mandrin et recouvrent conjointement le corps (1) du mandrin sur toute sa longueur axiale.
